# EUROPÄISCHE PATENTSCHRIFT

(11) **EP 2 525 066 B1**
(45) Veröffentlichungstag und Bekanntmachung des Hinweises auf die Patenterteilung: **09.05.2018**
(21) Anmeldenummer: 12001783.5
(22) Anmeldetag: 16.03.2012
(51) Int. Cl.: F02D 41/02, F02D 41/30, F02D 41/00, F02D 41/14

(54) **Verfahren und Vorrichtung zur Desulfatisierung einer in einer Diesel-Brennkraftmaschine angeordneten Abgasreinigungseinrichtung**
Method and device for desulfation of a exhaust gas cleaning device in a diesel combustion engine
Procédé et dispositif de désulfatation d'un dispositif de nettoyage des gaz d'échappement agencé dans un moteur à combustion diesel

(30) Priorität: 19.05.2011 DE 102011102047
(43) Veröffentlichungstag der Anmeldung: 21.11.2012
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- JP-A- 2002 047 986
- US-A1- 2004 221 831
- US-A1- 2006 156 709
- US-B1- 6 276 334

## Beschreibung

Die Erfindung betrifft ein Verfahren zur Desulfatisierung einer in einer Abgasleitung einer Brennkraftmaschine, insbesondere einer Diesel-Brennkraftmaschine, angeordneten Abgasreinigungseinrichtung gemäß dem Oberbegriff des Anspruchs 1. Ferner betrifft die Erfindung eine Vorrichtung zur Desulfatisierung einer in einer Abgasleitung einer Brennkraftmaschine, insbesondere einer Diesel-Brennkraftmaschine, angeordneten Abgasreinigungseinrichtung gemäß dem Oberbegriff des Anspruchs 13.

Es ist allgemein bekannt, dass, bei mit Luftüberschuss betriebenen Brennkraftmaschinen, katalytisch arbeitende Nachbehandlungssysteme, wie zum Beispiel NOx-Speicherkatalysatoren, SCR-Katalysatoren oder Partikelfilter eingesetzt werden, um die gesetzlich vorgeschriebenen Abgasgrenzwerte einhalten zu können. All diesen Systemen ist gemein, dass Stickstoffdioxid (NO₂) ein wichtiger Bestandteil der an den Nachbehandlungssystemen ablaufenden Reaktionen darstellt. Dieses Stickstoffdioxid wird anhand, meist platinhaltiger, NO-Oxidationskatalysatoren mit Hilfe des im Abgas enthaltenen Sauerstoffs aus dem vom Motor emittierten Stickstoffmonoxid gebildet:

2NO + O₂ ↔ 2NO₂

Im realen Motorenbetrieb stellt allerdings die Verschwefelung dieser NO-Oxidationskatalysatoren durch den im Kraftstoff und/oder im Motorenöl enthaltenen Schwefel ein erhebliches Problem dar. Durch die Verbrennung bildet sich aus diesem Schwefel SO₂, das an den NO-Oxidationskatalysatoren gemäß der nachstehenden Gleichungen zu SO₃ oxidiert wird:

S + O₂ → SO₂

2SO₂ + O₂ → SO₃

Dabei hat es sich gezeigt, dass die Menge an gebildetem SO₃ und die Menge an gebildetem NO₂ in einem direkten Zusammenhang zueinander stehen, nämlich dergestalt, dass ein NO-Oxidationskatalysator, der in an sich erwünschter Weise große Mengen an NO₂ bildet, zugleich in unerwünschter Weise große Mengen an SO₃ erzeugt. Dieses SO₃ bildet mit dem metallhaltigen Katalysator-Washcoat Sulfate oder mit Wasser Schwefelsäure, die auf der Oberfläche des Katalysators physiosorbiert werden. Beides führt zu einer Abdeckung der aktiven Zentren des Katalysators und damit zu einem Rückgang von dessen Aktivität. Eine Entschwefelung bzw. Desulfatisierung der NO-Oxidationskatalysatoren kann durch Anhebung der Abgastemperaturen auf 500°C erfolgen, wobei diese Temperaturen im normalen Fahrzeugbetrieb, insbesondere in Verbindung mit dem Einsatz eines Abgasturboladers kaum erreicht werden.

Es ist bereits allgemein bekannt, zur Desulfatisierung der NO-Oxidationskatalysatoren, die Kohlenwasserstoffkonzentration im Abgas anzuheben, zum Beispiel durch eine späte Nacheinspritzung von Kraftstoff in den Brennraum, so dass es anschließend zu einer Oxidation dieser unverbrannten Kohlenwasserstoffe an den NO-Oxidationskatalysatoren kommt, wodurch eine hohe Exothermie erzeugt wird, die die Entschwefelung der NO-Oxidationskatalysatoren erlaubt. Allerdings besteht hier das Problem, insbesondere bei stark verschwefelten NO-Oxidationskatalysatoren sowie bei niedrigen Abgastemperaturen und dadurch bedingter verschlechterter Umsetzung der Kohlenwasserstoffe, dass die Oxidation dieser Kohlenwasserstoffe nicht mehr vollständig bzw. gegebenenfalls gar nicht mehr möglich ist, so dass es neben der Schwefelvergiftung zu einer zusätzlichen Versottung der NO-Oxidationskatalysatoren durch die langkettigen Kohlenwasserstoffverbindungen kommt. Dies führt dann meistens zum Verstopfen der NO-Oxidationskatalysatoren und damit zu deren Ausfall.

Falls, wie zuvor beschrieben, die Kohlenwasserstoffe am NO-Oxidationskatalysator nicht quantitativ zersetzt werden können und damit stromab dieser Katalysatoren noch hohe Mengen an Kohlenwasserstoffen zur Verfügung stehen, ergibt sich insbesondere in Verbindung mit einem, einem NO-Oxidationskatalysator nachgeschalteten SCR-Katalysator zur Durchführung einer selektiven katalytischen Reduktion ein weiteres Problem: diese SCR-Katalysatoren oxidieren ebenfalls Kohlenwasserstoffe, so dass lokal sehr hohe Temperaturen auftreten können, die zu einer Schädigung der sehr temperaturempfindlichen SCR-Katalysatoren führen können, insbesondere dann, wenn diese SCR-Katalysatoren, was regelmäßig der Fall ist, Vanadiumoxid als Aktivkomponente enthalten.

Eine weitere grundsätzliche Möglichkeit der Desulfatisierung der NO-Oxidationskatalysatoren bestünde darin, dass in einer Desulfatisierungsphase vom mageren in den fetten Motorbetrieb gewechselt wird, wodurch es zum einen zu einem starken Temperaturanstieg der Abgase, aber auch zur Bildung einer reduzierenden Atmosphäre im Abgasstrang kommt, mit deren Hilfe das gebildete SO₃ wieder zu SO₂ oder gar zu H₂S reduziert und ausgetrieben werden könnte. Der erhebliche Nachteil dieses Verfahrens besteht allerdings darin, dass es aufgrund des Sauerstoffmangels während der Verbrennung zu einem sehr starken Anstieg der Rußemissionen kommt. Zudem ist hier die thermische Belastung des Motors aufgrund des unterstöchiometrischen Betriebes sehr hoch.

Zum Beispiel ist es aus der DE 101 31 588 A1 bekannt, einen Stickoxid-Speicherkatalysator in einem Desulfatisierungsprozess vom eingelagerten Schwefel zu befreien. Hierfür wird die Brennkraftmaschine in einen Desulfatisierungsbetriebsmodus geschaltet, in dem durch Kraftstoffnacheinspritzung eine Anhebung der Abgastemperatur auf über 500°C und die Einstellung einer reduzierenden Abgaszusammensetzung auf Werte von ca. 0,95 oder weniger für das Luft-Kraftstoffverhältnis eingestellt wird.

Eine periodische Desulfatisierung eines Stickoxid- oder Schwefeloxidspeichers mit einer Fett-/Mager-Motorzylinderaufteilung ist aus der DE 199 10 503 C1 bekannt.

Ferner beschreibt die DE 197 53 573 A1 eine Abgasreinigungsanlage mit einem NOx-Speicherkatalysator, dem in Richtung zur Brennkraftmaschine hin ein sogenannter Schwefelspeicher vorgeschaltet ist, der den Schwefel im mageren Abgas und bei Sorptionstemperatur sorpiert und ihn bei einer Temperatur oberhalb der Sorptionstemperatur sowie fettem Abgas freigibt.

Eine Desulfatisierung eines Speicherkatalysators ist ferner auch aus der DE 101 58 568 A1 bekannt. Konkret wird hier vorgeschlagen, während der Regenerationsphase die innermotorische Verbrennung derart zu steuern, dass das Luftverhältnis Lambda im Abgas auf einen ersten Wert abgesenkt und anschließend durch nachmotorische Zugabe eines Reduktionsmittels das Luftverhältnis Lambda auf einen zweiten, niedrigeren Wert eingestellt wird.

Ferner ist aus der DE 197 31 623 B4 ein Verfahren zur Desulfatisierung einer Abgasreinigungsanlage eines Dieselmotors als Brennkraftmaschine bekannt, die einen, einem NOₓ-Speicher vorgeschalteten Oxidationskatalysator aufweist. Konkret wird dort vorgeschlagen in einem ersten Schritt abgastemperatursteigernde Maßnahmen am Oxidationskatalysator vorzunehmen, wenn die Notwendigkeit einer Desulfatisierung erkannt worden ist. In einem weiteren Schritt wird vorgeschlagen, einen nahezu sauerstofffreien Abgasstrom mit einem CO-Gehalt von 1 bis 10% am NOₓ-Speicher zu erzeugen. Die Abgastemperaturerhöhung erfolgt beispielsweise durch Androsselung des Dieselmotors unter Beibehaltung eines Betriebs mit Lambda größer 1, insbesondere auf ein Lambda von 1,01 bis 1,05, wobei insbesondere auch eine katalytische Aufheizung erzielt wird. Weiter ist vorgesehen, die Abgastemperatursteigerung durch Verschieben des Einspritzzeitpunktes nach spät zu erreichen. Als Maßnahme zur Erhöhung der CO-Konzentration wird vorgeschlagen, den Oxidationskatalysator mit Steam-Reforming-Komponenten zu versehen. Diese Verfahrensführung lässt sich nicht ohne weiters auf die Desulfatisierung von NO-Oxidationskatalysatoren übertragen, insbesondere nicht auf NO-Oxidationskatalysatoren, denen zudem noch ein SCR-Katalysator nachgeschaltet ist. Zudem führt die Verschiebung des Einspritzzeitpunkts zu einem starken Anstieg der Emission von unverbrannten, langkettigen Kohlenwasserstoffen (HC), die zu einer Versottung bzw. Verkokung der Katalysatoren führen können. Zugleich senken sie die Anspringtemperatur für die Oxidation von CO an den Oxidationskatalysatoren ab, da es zu einer Konkurrenzreaktion zwischen HC- und CO- Oxidation kommt.

Aus der JP 2002 047986 A ist eine Abgasreinigungsanlage bekannt, bei der zur Erhöhung der zur Desulfatisierung notwendigen Temperatur eine zusätzliche Vorrichtung vorgesehen ist. Diese Vorrichtung ermöglicht einen Anstieg der Temperatur auf etwa 600°C.

Demgegenüber ist Aufgabe der vorliegenden Erfindung, ein Verfahren und eine Vorrichtung zur Desulfatisierung einer in einer Abgasleitung einer Brennkraftmaschine, insbesondere einer Diesel-Brennkraftmaschine, angeordneten Abgasreinigungseinrichtung, insbesondere eines NO-Oxidationskatalysators, zu schaffen, mittels dem bzw. mittels der die Desulfatisierung auf funktionssichere und einfache Art und Weise mit einer hohen Effektivität durchgeführt werden kann.

Diese Aufgabe wird gelöst mit den Merkmalen der unabhängigen Ansprüche. Vorteilhafte Ausgestaltungen hierzu sind Gegenstand der darauf rückbezogenen Unteransprüche.

Erfindungsgemäß wird ein Verfahren zur Desulfatisierung einer in einer Abgasleitung einer Brennkraftmaschine, insbesondere einer Diesel-Brennkraftmaschine, angeordneten Abgasreinigungseinrichtung vorgeschlagen, wobei die Abgasreinigungseinrichtung wenigstens einen schwefelvergiftbaren und damit zu vorgegebenen Zeiten zu entschwefelnden Oxidationskatalysator aufweist, dem während einer Desulfatisierungsphase mittels des Abgasstroms eine definierte Menge an Kohlenmonoxid zugeführt wird. Erfindungsgemäß wird vorgeschlagen, dass der schwefelvergiftbare und damit zu vorgegebenen Zeiten zu entschwefelnde Oxidationskatalysator durch einen, eine CO-Oxidationsaktivität aufweisenden NO-Oxidationskatalysator gebildet ist, dem während der Desulfatisierungsphase durch homogene Kompressionszündung der Brennkraftmaschine oder durch teilhomogene Kompressionszündung der Brennkraftmaschine eine solche Menge an Kohlenmonoxid zugeführt wird, dass die Temperatur am zu entschwefelnden NO-Oxidationskatalysator auf eine definierte, eine Desulfatisierung des NO-Oxidationskatalysators ermöglichende Desulfatisierungstemperatur ansteigt.

Mit der vorliegenden Erfindungsidee lässt sich eine Entschwefelung bzw. Desulfatisierung eines Katalysators wesentlich einfacher durchführen als mit Kohlenwasserstoffen, da Kohlenmonoxid wesentlich einfacher als Kohlenwasserstoffe an dem zu entschwefelnden und eine CO-Oxidationsaktivität aufweisenden NO-Oxidationskatalysator oxidiert:

2CO + O₂ → 2CO₂

Dies führt, selbst bei einer nicht quantitativen Umsetzung der Kohlenmonoxide, zu keiner unerwünschten Versottung der Katalysatoren. Dafür kommt es aber analog zur Oxidation von Kohlenwasserstoffen zu dem erwünschten Temperaturanstieg an den zu entschwefelnden Katalysatoren, welcher Temperaturanstieg zu einer Desulfatisierung dieser Katalysatoren führt. Ein weiterer wesentlicher Vorteil bei der Verwendung von Kohlenmonoxid zur Entschwefelung bzw. Desulfatisierung von Katalysatoren besteht darin, dass es, in Verbindung mit nachgeschalteten Abgasreinigungseinrichtungen, insbesondere mit SCR-Katalysatoren, die regelmäßig keine CO-Oxidationsaktivität besitzen, selbst bei einer unvollständigen Zersetzung des Kohlenmonoxids an den zu entschwefelnden Katalysatoren, nicht zu einem unerwünscht hohen Temperaturanstieg bei den nachgeschalteten Abgasreinigungseinrichtungen, insbesondere den SCR-Katalysatoren, kommen kann, so dass deren thermische Schädigung funktionssicher vermieden werden kann.

Die Erfindungsidee ist grundsätzlich für den Einsatz in sämtlichen Brennkraftmaschinen geeignet, wobei der Einsatz in Verbindung mit DieselBrennkraftmaschinen, wie sie insbesondere in Nutzfahrzeugen zum Einsatz gelangen, bevorzugt ist. Weiterhin ist eine bevorzugte Verwendung der erfindungsgemäßen Lehre in Verbindung mit aufgeladenen Brennkraftmaschinen vorgesehen, bei denen wenigstens ein Abgasturbolader zum Einsatz kommt, da hier insbesondere die Problematik der niederen Temperaturen im normalen Fahrzeugbetrieb besteht.

Bei der homogenen Kompressionszündung (Englisch: homogenous charge compression ignition, abgekürzt HCCI, oder auch controlled auto ignition, abgekürzt CAI) der Brennkraftmaschine zur Anhebung der Kohlenmonoxidemission in der Desulfatisierungsphase handelt es sich um ein Brennverfahren, bei dem der Kraftstoff möglichst homogen im Brennraum verteilt und anschließend durch die Kompression selbstgezündet wird. Dies erfolgt meist durch eine definierte Vermischung von Kraftstoff und Frischluft vor den Zylindern der Brennkraftmaschine. Ziel dieser homogenen Kompressionszündung ist es, die Verbrennung im gesamten Brennraum möglichst gleichzeitig zu initiieren. Durch dieses Brennverfahren ist man in der Lage, die NOx- und Rußemissionen erheblich abzusenken, während es auf der anderen Seite zu einem Anstieg der Kohlenmonoxidemissionen kommt.

Der Nachteil beim homogenen Brennverfahren besteht bei direkteinspritzenden Brennkraftmaschinen, bei denen im Normalbetrieb der Brennstoff direkt in den Brennraum eingedüst wird, darin, dass im Ansaugtrakt zusätzliche Vorrichtungen zum Einbringen von Kraftstoff vorgesehen werden müssen. Dies bedeutet einen nicht unerheblichen Kostenanstieg.

Dies wird bei der sogenannten teilhomogenen Kompressionszündung vermieden: Hier wird bei direkteinspritzenden Brennkraftmaschinen der Einspritzzeitpunkt stark nach früh verschoben, so dass Kraftstoff und Luft sich erst im Brennraum vermischen. Auf Grund des frühen Einspritzzeitpunkts wird eine Zündung der Kraftstofftröpfchen vermieden und stattdessen deren Verdampfung durch eine relativ lange Verweilzeit begünstigt. Allerdings gelingt meist keine komplett homogene Vermischung von Kraftstoff und Luft, so dass man von einer teilhomogenen Kompressionszündung spricht. Dennoch kommt es auch hier zu einem starken Anstieg der Kohlenmonoxidemissionen. Gleichzeitig steigt üblicherweise die Emission von Kohlenwasserstoffen an, allerdings mit zwei erheblichen Unterschieden zu den oben, insbesondere in der DE 197 31 623 B4, beschriebenen Verfahren, die auf einer Verschiebung des Einspritzzeitpunkts nach spät basieren:

Zum einen sind die Kohlenmonoxidkonzentrationen bei der homogenen bzw. teilhomogenen Kompressionszündung erheblich höher, als die Kohlenwasserstoffkonzentrationen, während sich das Verhältnis bei der Verstellung nach spät in Richtung Kohlenwasserstoff verschiebt und diese üblicherweise erheblich höher als die Kohlenmonoxidkonzentrationen sind. Zum anderen sind die bei der homogenen bzw. teilhomogenen Kompressionszündung emittierten Kohlenwasserstoffe erheblich kurzkettiger, üblicherweise im Bereich von ein bis fünf Kohlenstoffatomen, so dass eine Versottung der Oxidationskatalysatoren durch langkettige, pyrolsierte und kondensierte Kohlenwasserstoffe vermieden werden kann.

Besonders bevorzugt ist, insbesondere bei teilhomogener Kompressionszündung, eine Verfahrensführung, bei der der Einspritzzeitpunkt in der Desulfatisierungsphase nach früh, insbesondere auf wenigstens 15° Kurbelwinkel bis maximal 370° Kurbelwinkel vor dem oberen Zünd-Totpunkt, höchst bevorzugt auf einen Wert von 20° Kurbelwinkel bis 350° Kurbelwinkel vor dem oberen Zünd-Totpunkt, verschoben wird.

Alternativ oder bevorzugt zusätzlich dazu kann vorgesehen werden, in der Desulfatisierungsphase, während des homogenen oder teilhomogenen Brennkraftmaschinenbetriebs, eine von der Abgasseite zur Ladeluftseite der Brennkraftmaschine rückgeführte Abgasmenge so anzuheben, dass der Anteil des Abgases in der der Brennkraftmaschine zugeführten Ladeluft wenigstens 30% und höchstens 80% beträgt.

Weiter kann auch vorgesehen sein, dass die dem Brennraum der Brennkraftmaschine in der Desulfatisierungsphase zurückgeführte Abgasmenge und das Luft-/Kraftstoffverhältnis Lambda so variiert werden, dass die Brennraumtemperatur im Bereich von größer bis einschließlich 1,02 Lambda 1850K, im Bereich von 1,02 bis einschließlich 0,98 Lambda 1600K und im Bereich kleiner 0,98 Lambda 1500K nicht übersteigt.

Weiter alternativ oder zusätzlich kann vorgesehen werden, dass der Einspritzdruck in der Desulfatisierungsphase um wenigstens 20% und/oder auf wenigstens 1200 bar, höchstens jedoch 3500bar angehoben wird.

Gemäß einer weiteren konkreten Verfahrensführung kann alternativ oder zusätzlich zur Erhöhung der Kohlenmonoxidemissionen vorgesehen sein, dass das Verdichtungsverhältnis in der Desulfatisierungsphase um wenigstens 20%, höchstens jedoch um 75% und/oder nicht unter 6:1 abgesenkt wird.

Weiter können alternativ oder zusätzlich die Ventilöffnungszeiten in der Desulfatisierungsphase verändert werden. Diese Maßnahmen zielen zum einen darauf, den Zündverzug zu verlängern, so dass sich eine längere Homogenisierungsphase ergibt, zum anderen sollen sie einen zu starken Druckanstieg durch Absenken der Brenngeschwindigkeit erreichen. So ist es zum einen möglich, wenigstens ein Einlassventil vor Erreichen des unteren Ladungswechseltotpunkts zu schließen. Dadurch kommt es bei geschlossenem Auslassventil zu einer Verringerung des Brennraumdrucks und damit einhergehend zu einer Absenkung der Brennraumtemperatur. Auch ein sehr spätes Schließen des Einlassventils nach dem unteren Ladungswechseltotpunkt ist denkbar, wodurch bereits angesaugte Luft, wieder über die Einlassventile ausgestoßen wird. Dieses Verfahren ist als Miller-Zyklus bekannt und führt auf Grund der geringeren Füllung zu niedrigeren Spitzendrücken während der Verbrennung. Eine weitere Möglichkeit besteht darin, die Ventilöffnungszeiten in der Desulfatisierungsphase derart zu verändern, dass wenigstens ein Auslassventil länger geöffnet bleibt, wodurch der Restgasanteil durch Rückströmen von Abgas aus dem Abgastrakt angehoben und dadurch bedingt die Brenngeschwindigkeit verringert wird. Die Ventilöffungszeiten können insbesondere mit Hilfe eines variablen Ventiltriebs variiert werden, was an sich Stand der Technik ist, so dass an dieser Stelle nicht weiter darauf eingegangen wird (EP 0 279 265, DE 38 23 332 A1, DE 39 20 895 A1).

Dabei ist es gemäß einer weiteren besonders bevorzugten Verfahrensführung vorteilhaft, wenn die Desulfatisierungstemperatur wenigstens 500°C beträgt und/oder die Kohlenmonoxidkonzentration in der Desulfatisierungsphase auf wenigstens 2000ppm, höchstens jedoch auf 7%, bezogen auf den jeweiligen Abgasmassenstrom, angehoben wird. Weiter hat es sich als besonders vorteilhaft erwiesen, wenn die Kohlenwasserstoffkonzentration in der Desulfatisierungsphase nicht über 50% der aktuellen KohlenmonoxidKonzentration ansteigt. Dies, also die Anhebung der Desulfatisierungstemperatur auf wenigstens 500°C und/oder die Anhebung der Kohlenmonoxidkonzentration auf wenigstens 2000ppm und/oder die Absenkung der Kohlenwasserstoffkonzentration auf unter 50% der Kohlenmonoxidkonzentration gelingt insbesondere durch die zuvor beschriebenen motorischen Maßnahmen.

In Verbindung mit der erfindungsgemäßen Lehre ist dabei insbesondere zu berücksichtigen, dass die zuvor gezeigten motorischen Maßnahmen zur Erhöhung der Kohlenmonoxidemissionen in der Desulfatisierungsphase, wie zum Beispiel Spritzbeginn, rückgeführte Abgasmenge, Verdichtungsverhältnis, Ventilöffnungszeigen, Einspritzdruck, etc. bisher im Stand der Technik stets dahingehend variiert werden, dass die gebildeten CO-Menge möglichst gering gehalten wird, um erhöhte CO-Emissionen zu vermeiden, bzw. die Anhebung der Temperatur durch die katalytische Oxidation von langkettigen Kohlenwasserstoffen realisiert wird, was nur bei ausreichend hohen Abgastemperaturen ohne Verkokung der Katalysatoren gelingt. Im Gegensatz dazu werden bei der erfindungsgemäßen Lösung die Motorparameter jedoch so verändert, dass genau das Gegenteil der Fall ist, nämlich die CO-Emissionen in der Desulfatisierungsphase deutlich stärker angehoben werden als die HC-Emissionen, um an dem zu entschwefelnden Katalysator eine hohe Exothermie aufgrund der dort stattfindenden Oxidation des Kohlenmonoxids zu Kohlendioxid zu erzielen. Zudem stellt das Verfahren sicher, dass ein Großteil der Kohlenwasserstoffe erheblich kleiner, typischerweise im Bereich von ein bis fünf Kohlenstoffatomen pro Molekül, als bei den oben genannten Verfahren des Standes der Technik ist, wodurch zusätzlich die Gefahr des Verkokens der Katalysatoren durch große Mengen langkettiger Kohlenwasserstoffe erfindungsgemäß vermieden wird. Da Kohlenmonoxid und kurzkettige Kohlenwasserstoffe deutlich einfacher zu oxidieren sind als die langkettigen, unverbrannten Kohlenwasserstoffen aus der Kraftstofffraktion, wie sie bei einer späten Einspritzung gemäß dem Stand der Technik entstehen, kann die Anspringtemperatur der Katalysatoren erfindungsgemäß abgesenkt werden. Dies ermöglicht eine Desulfatisierung auch bei niedrigen Abgastemperaturen stromauf des NO-Oxidationskatalysators.

Die mit der erfindungsgemäßen Vorrichtung zu erzielenden Vorteile wurden bereits zuvor in Verbindung mit der Verfahrensführung ausführlich erläutert. Insofern wird auf die zuvor gemachten Ausführungen verwiesen.

Die vorstehend erläuterten und/oder in den Unteransprüchen wiedergegebenen vorteilhaften Aus- und Weiterbildungen der Erfindung können dabei, außer zum Beispiel in den Fällen eindeutiger Abhängigkeiten oder unvereinbarer Alternativen, einzeln oder aber auch in beliebiger Kombination miteinander zur Anwendung kommen.

Die Erfindung wird nachfolgend anhand einer lediglich beispielhaften Zeichnung näher erläutert.

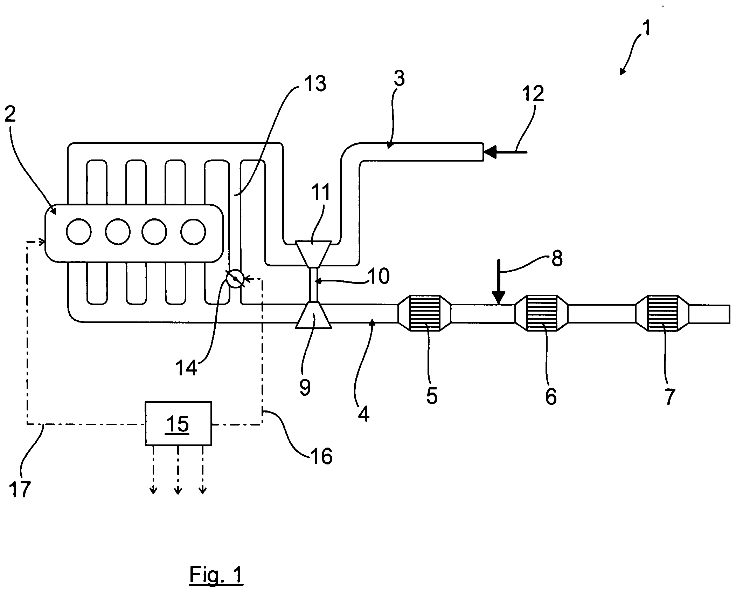

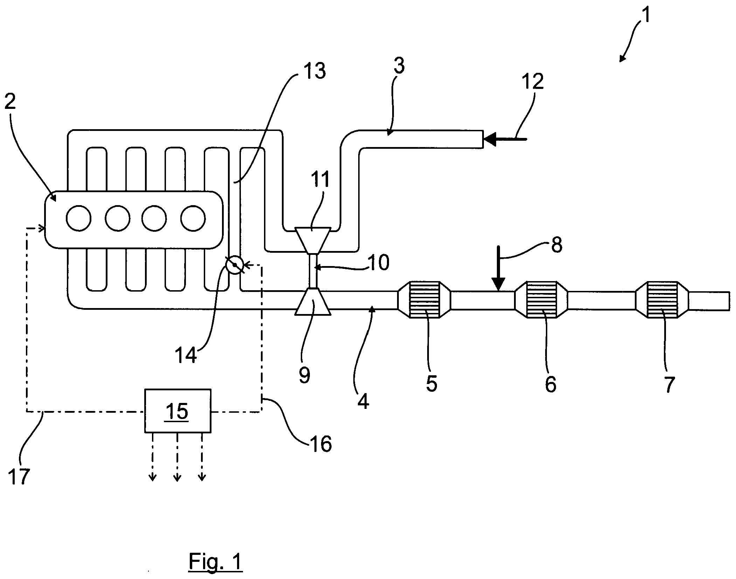

Die einzige Figur zeigt schematisch eine Abgasnachbehandlungsvorrichtung 1 für eine hier lediglich äußerst schematisch dargestellte Brennkraftmaschine 2, der über eine Ladeluftleitung 3 Ladeluft 12 in an sich bekannter Weise zugeführt wird.

Von der Brennkraftmaschine 2 führt weiter eine Abgasleitung 4 weg, in der hier beispielhaft ein NO-Oxidationskatalysator 5, ein SCR-Katalysator 6 sowie ein Partikelfilter 7 in Abgasströmungsrichtung nacheinander angeordnet sind. Stromauf des SCR-Katalysators 6 erfolgt, wie hier lediglich äußerst schematisch mit dem Pfeil 8 angedeutet, eine Zudosierung eines Reduktionsmittels, beispielsweise einer wässrigen Ammoniaklösung.

Stromauf des NO-Oxidationskatalysators 5 ist eine Abgasturbine 9 eines Abgasturboladers 10 in der Abgasleitung 4 angeordnet, mittels der in üblicher Weise ein Verdichter 11 in der Ladeluftleitung 3 zur Verdichtung der Ladeluft 12 angetrieben wird.

Ferner ist von der Abgasleitung 4 eine Abgasrückführleitung 13 zur Ladeluftleitung 3 geführt, mittels der in an sich bekannter Weise Abgas von der Abgasleitung 4 zur Ladeluftleitung 3 entsprechend vorgegebener, definierter Rückführparameter rückgeführt werden kann. Zur Freigabe bzw. zum Absperren der Abgasrückführleitung 13 ist in diese Abgasrückführleitung 13 ein hier lediglich äußerst schematisch dargestelltes Absperrelement 14, z.B. eine Abgasklappe oder dergleichen, angeordnet.

Wird nun ausgehend von einem normalen Betrieb bzw. Nicht-Desulfatisierungsbetrieb der Brennkraftmaschine 2, z.B. mittels Sensoren oder dergleichen Messeinrichtungen und/oder rechnerisch, festgestellt oder vorgegeben, dass eine Desulfatisierung des NO-Oxidationskatalysators 5 vorzunehmen ist, dann kann zu Beginn der Desulfatisierungsphase mittels der hier lediglich äußerst schematisch dargestellten Steuereinrichtung 15 eine homogene Kompressionszündung der Brennkraftmaschine oder ein teilhomogener Brennkraftmaschinenbetrieb vorgegeben werden bzw. wenigstens ein definierter Brennkraftmaschinen-Betriebsparameter so gegenüber einer Einstellung in der Nicht-Desulfatisierungsphase verändert werden, dass die Kohlenmonoxidemission der Brennkraftmaschine 2 angehoben wird. Bevorzugt wird dabei die Kohlenmonoxidkonzentration auf wenigstens 2000ppm, höchstens jedoch 7%, angehoben und so die Temperatur am zu entschwefelnden NO-Oxidationskatalysator durch Oxidation des Kohlenmonoxids auf eine vorgegebene Desulfatisierungstemperatur von wenigstens 500°C erhöht.

Durch diesen Temperaturanstieg am NO-Oxidationskatalysator 5 auf die vorgegebene Desulfatisierungstemperatur kommt es dann zu einer Desulfatisierung bzw. Entschwefelung des NO-Oxidationskatalysators 5, wobei, selbst bei einer unvollständigen Zersetzung des Kohlenmonoxids an dem NO-Oxidationskatalysator 5, keine Versottung des NO-Oxidationskatalysators 5 erfolgt, wie dies zum Beispiel bei einem herkömmlichen Anheben der Konzentration der Kohlenwasserstoffe und einer unvollständigen Oxidation dieser Kohlenwasserstoffe an den NO-Oxidationskatalysatoren der Fall sein könnte. Des Weiteren kommt es dadurch, dass der dem NO-Oxidationskatalysator 5 nachgeschaltete SCR-Katalysator 6 keine CO-Oxidationsaktivität aufweist, auch zu keinem nennenswerten Temperaturhub an diesem SCR-Katalysator 6, so dass eine thermische Schädigung des SCR-Katalysators 6 zuverlässig vermieden werden kann.

Um die Kohlenmonoxidemissionen entsprechend anheben zu können, kann mittels der Steuereinrichtung 15 beispielsweise das Absperrelement 14 dergestalt über die hier strichpunktierte Steuerleitung 16 angesteuert werden, dass die Abgasrückführrate auf über 30%, bezogen auf die der Brennkraftmaschine 2 zugeführte Ladeluftmenge, angehoben wird. Alternativ oder zusätzlich kann, wie dies mit der Steuerleitung 17 lediglich schematisch angedeutet ist, vorgesehen sein, dass das Luft-/Kraftstoffverhältnis Lambda zum Beispiel auf unter 1,05 abgesenkt wird und/oder dass der Einspritzdruck um zum Beispiel wenigstens 20% bzw. auf mindestens 1200bar erhöht wird. Alternativ oder zusätzlich kann auch ein Verschieben des Einspritzzeitpunktes zum Beispiel auf mindestens 20° Kurbelwinkel, jedoch nicht mehr als 370° Kurbelwinkel vor dem oberen Totpunkt (Zünd-OT) und/oder ein Absenken des Verdichtungsverhältnisses, insbesondere um mindestens 20%, und/oder ein Verändern der Ventilöffnungszeiten vorgesehen sein.

Es versteht sich, dass am Ende der Desulfatisierungsphase wieder ein herkömmlicher Brennkraftmaschinenbetrieb eingestellt wird, d.h. insbesondere die homogene Kompressionszündung der Brennkraftmaschine oder ein teilhomogenen Brennkraftmaschinenbetrieb beendet wird.

Die Steuereinrichtung 15 kann zum Beispiel durch ein separates Steuergerät gebildet sein. Ebenso kann die Steuereinrichtung 15 aber auch Bestandteil eines Motorsteuergeräts der Brennkraftmaschine 2 sein.

## Patentansprüche

1. Verfahren zur Desulfatisierung einer in einer Abgasleitung einer Brennkraftmaschine angeordneten Abgasreinigungseinrichtung, wobei die Abgasreinigungseinrichtung wenigstens einen schwefelvergiftbaren und damit zu vorgegebenen Zeiten zu entschwefelnden Oxidationskatalysator aufweist, dem während einer Desulfatisierungsphase mittels des Abgasstroms eine definierte Menge an Kohlenmonoxid zugeführt wird, **dadurch gekennzeichnet, dass** der wenigstens eine schwefelvergiftbare und damit zu vorgegebenen Zeiten zu entschwefelnde Oxidationskatalysator durch einen, eine CO-Oxidationsaktivität aufweisenden NO-Oxidationskatalysator (5) gebildet ist, dem während der Desulfatisierungsphase durch homogene Kompressionszündung der Brennkraftmaschine oder durch teilhomogene Kompressionszündung der Brennkraftmaschine eine solche Menge an Kohlenmonoxid zugeführt wird, dass die Temperatur am zu entschwefelnden NO-Oxidationskatalysator (5) auf eine definierte, eine Desulfatisierung des NO-Oxidationskatalysators (5) ermöglichende Desulfatisierungstemperatur ansteigt.

2. Verfahren nach Anspruch 1, **dadurch gekennzeichnet, dass** der Einspritzzeitpunkt des Kraftstoffs in der Desulfatisierungsphase, insbesondere bei teilhomogener Kompressionszündung, nach früh, insbesondere auf 15° Kurbelwinkel bis maximal einschließlich 370° Kurbelwinkel vor dem oberen Zünd-Totpunkt, vorteilhaft auf 20° Kurbelwinkel bis 350° Kurbelwinkel vor dem oberen Zünd-Totpunkt, verschoben wird.

3. Verfahren nach Anspruch 1 oder 2, **dadurch gekennzeichnet, dass** in der Desulfatisierungsphase, insbesondere bei teilhomogener Kompressionszündung, eine von der Abgasseite zur Ladeluftseite der Brennkraftmaschine (2) rückgeführte Abgasmenge so angehoben wird, dass der Anteil des Abgases in der der Brennkraftmaschine zugeführten Ladeluft wenigstens 30% und höchstens 80% beträgt.

4. Verfahren nach einem der vorhergehenden Ansprüche, **dadurch gekennzeichnet, dass** die dem Brennraum der Brennkraftmaschine in der Desulfatisierungsphase zurückgeführte Abgasmenge und das Luft-/Kraftstoffverhältnis Lambda so variiert werden, dass die Brennraumtemperatur im Bereich größer bis einschließlich 1,02 Lambda, insbesondere im Bereich von 40 bis einschließlich 1,02 Lambda, 1850K, im Bereich von 1,02 bis einschließlich 0,98 Lambda 1600K und im Bereich kleiner 0,98 Lambda 1500K nicht übersteigt.

5. Verfahren nach Anspruch 4, **dadurch gekennzeichnet, dass** das Luft-/Kraftstoffverhältnis nicht unter einen Lambdawert von 1 absinkt.

6. Verfahren nach einem der vorhergehenden Ansprüche, **dadurch gekennzeichnet, dass** der Einspritzdruck in der Desulfatisierungsphase um wenigstens 20% und/oder auf wenigstens 1200bar bis maximal 3500bar angehoben wird.

7. Verfahren nach einem der vorhergehenden Ansprüche, **dadurch gekennzeichnet, dass** das Verdichtungsverhältnis in der Desulfatisierungsphase um wenigstens 20% bis maximal 75% und/oder nicht unter 6:1 abgesenkt wird.

8. Verfahren nach einem der vorhergehenden Ansprüche, **dadurch gekennzeichnet, dass** die Ventilöffnungszeiten in der Desulfatisierungsphase derart geändert werden, dass die Restgasmenge angehoben wird und/oder die Brennraumtemperatur abgesenkt wird.

9. Verfahren nach Anspruch 8, **dadurch gekennzeichnet, dass** die Ventilöffnungszeiten in der Desulfatisierungsphase derart verändert werden, dass, insbesondere mit Hilfe eines variablen Ventiltriebs, wenigstens ein Auslassventil länger geöffnet bleibt und/oder wenigstens ein Einlassventil später geöffnet und/oder später geschlossen wird.

10. Verfahren nach einem der vorhergehenden Ansprüche, **dadurch gekennzeichnet, dass** die Desulfatisierungstemperatur wenigstens 500°C, höchstens jedoch 650°C beträgt.

11. Verfahren nach einem der vorhergehenden Ansprüche, **dadurch gekennzeichnet, dass** die Kohlenmonoxidkonzentration in der Desulfatisierungsphase auf wenigstens 2000ppm, höchstens jedoch 7%, angehoben wird.

12. Verfahren nach einem der vorhergehenden Ansprüche, **dadurch gekennzeichnet, dass** der Zahlenwert der Kohlenwasserstoffkonzentration in der Desulfatisierungsphase 5% bis 50% des Zahlenwertes der Kohlenmonoxidkonzentration in der Desulfatisierungsphase beträgt.

13. Vorrichtung zur Durchführung eines Verfahrens zur Desulfatisierung einer in einer Abgasleitung einer Brennkraftmaschine angeordneten Abgasreinigungsvorrichtung, wobei die Abgasreinigungseinrichtung wenigstens einen schwefelvergiftbaren und damit zu vorgegebenen Zeiten zu entschwefelnden Oxidationskatalysator (5) aufweist, dem während einer Desulfatisierungsphase mittels des Abgasstroms eine definierte Menge an Kohlenmonoxid zuführbar ist, **dadurch gekennzeichnet, dass** der schwefelvergiftbare und damit zu vorgegebenen Zeiten zu entschwefelnde Oxidationskatalysator durch einen, eine CO-Oxidationsaktivität aufweisenden NO-Oxidationskatalysator (5) gebildet ist, dem wenigstens ein, keine CO-Oxidationsaktivität aufweisender SCR-Katalysator (6) nachgeschaltet ist, und dass dem NO-Oxidationskatalysator (5) während der Desulfatisierungsphase durch homogene Kompressionszündung der Brennkraftmaschine oder durch teilhomogene Kompressionszündung der Brennkraftmaschine eine solche Menge an Kohlenmonoxid zuführbar ist, dass die Temperatur am zu entschwefelnden NO-Oxidationskatalysator (5) auf eine definierte, eine Desulfatisierung des NO-Oxidationskatalysators (5) ermöglichende Desulfatisierungstemperatur ansteigt.

## Claims

1. Method for desulphating an exhaust-gas purification device arranged in an exhaust line of an internal combustion engine, wherein the exhaust-gas purification device has at least one oxidation catalytic converter which is susceptible to sulphur poisoning and which must therefore be desulphurized at predefined times, to which oxidation catalytic converter a defined quantity of carbon monoxide is supplied by means of the exhaust-gas flow during a desulphation phase, **characterized in that** the at least one oxidation catalytic converter which is susceptible to sulphur poisoning and which must therefore be desulphurized at predefined times is formed by an NO oxidation catalytic converter (5) which exhibits CO oxidation activity and to which, during the desulphation phase, by means of homogeneous compression ignition of the internal combustion engine or by means of partially homogeneous compression ignition of the internal combustion engine, such a quantity of carbon monoxide is supplied that the temperature at the NO oxidation catalytic converter (5) to be desulphurized rises to a defined desulphation temperature which permits desulphation of the NO oxidation catalytic converter (5).

2. Method according to Claim 1, **characterized in that** the injection time for the fuel is shifted in the early direction, in particular to 15° crank angle up to 370° crank angle inclusive before ignition top dead centre, advantageously to 20° crank angle up to 350° crank angle before ignition top dead centre, in the desulphation phase, in particular in the case of partially homogenous compression ignition.

3. Method according to Claim 1 or 2, **characterized in that** an exhaust-gas quantity recirculated from the exhaust-gas side to the charge-air side of the internal combustion engine (2) is increased in the desulphation phase, in particular in the case of partially homogeneous compression ignition, such that the exhaust-gas fraction in the charge air supplied to the internal combustion engine is at least 30% and at most 80%.

4. Method according to one of the preceding claims, **characterized in that** the exhaust-gas quantity recirculated to the combustion chamber of the internal combustion engine in the desulphation phase and the air/fuel ratio lambda are varied such that the combustion chamber temperature does not exceed 1850K when lambda is in the range of 1.02 inclusive and greater, in particular in the range from 40 to 1.02 inclusive, does not exceed 1600K when lambda is in the range from 1.02 to 0.98, and does not exceed 1500K when lambda is in the range below 0.98.

5. Method according to Claim 4, **characterized in that** the air/fuel ratio does not fall below a lambda value of 1.

6. Method according to one of the preceding claims, **characterized in that** the injection pressure is increased by at least 20% and/or to at least 1200 bar to at most 3500 bar in the desulphation phase.

7. Method according to one of the preceding claims, **characterized in that** the compression ratio is decreased by at least 20% to at most 75%, and/or is decreased not below 6:1, in the desulphation phase.

8. Method according to one of the preceding claims, **characterized in that** the valve opening times are changed in the desulphation phase such that the residual gas quantity is increased and/or the combustion chamber temperature is decreased.

9. Method according to Claim 8, **characterized in that** the valve opening times are changed in the desulphation phase such that, in particular with the aid of a variable valve drive, at least one outlet valve remains open for longer and/or at least one inlet valve is opened later and/or closed later.

10. Method according to one of the preceding claims, **characterized in that** the desulphation temperature is at least 500°C but at most 650°C.

11. Method according to one of the preceding claims, **characterized in that** the carbon monoxide concentration is increased in the desulphation phase to at least 2000 ppm, but at most 7%.

12. Method according to one of the preceding claims, **characterized in that** the numerical value of the hydrocarbon concentration in the desulphation phase amounts to 5% to 50% of the numerical value of the carbon monoxide concentration in the desulphation phase.

13. Device for carrying out a method for desulphating an exhaust-gas purification device arranged in an exhaust line of an internal combustion engine, wherein the exhaust-gas purification device has at least one oxidation catalytic converter (5) which is susceptible to sulphur poisoning and which must therefore be desulphurized at predefined times, to which oxidation catalytic converter a defined quantity of carbon monoxide can be supplied by means of the exhaust-gas flow during a desulphation phase, **characterized in that** the oxidation catalytic converter which is susceptible to sulphur poisoning and which must therefore be desulphurized at predefined times is formed by an NO oxidation catalytic converter (5) which exhibits CO oxidation activity and downstream of which is positioned at least one SCR catalytic converter (6) which does not exhibit CO oxidation activity, and **in that**, during the desulphation phase, by means of homogeneous compression ignition of the internal combustion engine or by means of partially homogeneous compression ignition of the internal combustion engine, such a quantity of carbon monoxide can be supplied to the NO oxidation catalytic coverter (5) that the temperature at the NO oxidation catalytic converter (5) to be desulphurized is increased to a defined desulphation temperature which permits desulphation of the NO oxidation catalytic converter(5).

## Revendications

1. Procédé de désulfatation d'un dispositif de purification des gaz d'échappement disposé dans une conduite de gaz d'échappement d'un moteur à combustion interne, le dispositif de purification des gaz d'échappement présentant au moins un catalyseur d'oxydation pouvant être contaminé avec du soufre et devant par conséquent être désulfuré à intervalles prédéfinis, auquel une quantité définie de monoxyde de carbone est acheminée pendant une phase de désulfatation au moyen du courant de gaz d'échappement, **caractérisé en ce que** l'au moins un catalyseur d'oxydation pouvant être contaminé avec du soufre et devant par conséquent être désulfuré à intervalles prédéfinis est formé par un catalyseur d'oxydation de NO (5) présentant une activité d'oxydation de CO auquel est acheminée, pendant la phase de désulfatation, par allumage par compression homogène du moteur à combustion interne ou par allumage par compression partiellement homogène du moteur à combustion interne, une quantité de monoxyde de carbone telle que la température au niveau du catalyseur d'oxydation de NO à désulfurer (5) augmente à une température de désulfatation définie permettant une désulfatation du catalyseur d'oxydation de NO (5).

2. Procédé selon la revendication 1, **caractérisé en ce que** l'instant d'injection du carburant dans la phase de désulfatation, en particulier dans le cas d'un allumage par compression partiellement homogène, est réglé en avance, en particulier à un angle de vilebrequin de 15° à 370° inclus maximum avant le point mort haut d'allumage, avantageusement à un angle de vilebrequin de 20° à 350° avant le point mort haut d'allumage.

3. Procédé selon la revendication 1 ou 2, **caractérisé en ce que** dans la phase de désulfatation, en particulier dans le cas d'un allumage par compression partiellement homogène, on augmente la quantité de gaz d'échappement recirculée depuis le côté de gaz d'échappement vers le côté d'air de suralimentation du moteur à combustion interne (2) de telle sorte que la proportion du gaz d'échappement dans l'air de suralimentation acheminé au moteur à combustion interne soit au moins de 30 % et au plus de 80 %.

4. Procédé selon l'une quelconque des revendications précédentes, **caractérisé en ce que** l'on fait varier la quantité de gaz d'échappement recirculée dans la chambre de combustion du moteur à combustion interne dans la phase de désulfatation et le rapport air/carburant lambda de telle sorte que la température dans la chambre de combustion, dans une plage supérieure ou égale à 1,02 lambda, en particulier dans la plage de 40 à 1,02 lambda inclus, ne dépasse pas 1850K, dans la plage de 1,02 à 0,98 lambda inclus, ne dépasse pas 1600K et dans la plage inférieure à 0,98 lambda, ne dépasse pas 1500K.

5. Procédé selon la revendication 4, **caractérisé en ce que** le rapport air/carburant ne descend pas en dessous d'une valeur lambda de 1.

6. Procédé selon l'une quelconque des revendications précédentes, **caractérisé en ce que** la pression d'injection dans la phase de désulfatation est augmentée d'au moins 20 % et/ou d'au moins 1200 bars à au maximum 3500 bars.

7. Procédé selon l'une quelconque des revendications précédentes, **caractérisé en ce que** le rapport de compression dans la phase de désulfatation est abaissé d'au moins 20 % jusqu'à 75 % au maximum et/ou n'est pas abaissé en dessous de 6:1.

8. Procédé selon l'une quelconque des revendications précédentes, **caractérisé en ce que** les temps d'ouverture de soupapes dans la phase de désulfatation sont modifiés de telle sorte que la quantité de gaz résiduelle soit augmentée et/ou que la température de la chambre de combustion soit abaissée.

9. Procédé selon la revendication 8, **caractérisé en ce que** les temps d'ouverture de soupapes dans la phase de désulfatation sont modifiés de telle sorte que notamment à l'aide d'une commande de soupape variable, au moins une soupape d'échappement reste ouverte plus longtemps et/ou qu'au moins une soupape d'admission soit ouverte plus tard et/ou soit fermée plus tard.

10. Procédé selon l'une quelconque des revendications précédentes, **caractérisé en ce que** la température de désulfatation est au moins de 500°C, mais au plus de 650°C.

11. Procédé selon l'une quelconque des revendications précédentes, **caractérisé en ce que** la concentration en monoxyde de carbone dans la phase de désulfatation est augmentée à au moins 2000 ppm, au maximum toutefois à 7 %.

12. Procédé selon l'une quelconque des revendications précédentes, **caractérisé en ce que** la valeur numérique de la concentration en hydrocarbures dans la phase de désulfatation vaut 5 % à 50 % de la valeur numérique de la concentration en monoxyde de carbone dans la phase de désulfatation.

13. Dispositif pour mettre en oeuvre un procédé de désulfatation d'un dispositif de purification des gaz d'échappement disposé dans une conduite de gaz d'échappement d'un moteur à combustion interne, le dispositif de purification des gaz d'échappement présentant au moins un catalyseur d'oxydation (5) pouvant être contaminé avec du soufre et devant par conséquent être désulfuré à intervalles prédéfinis, auquel une quantité définie de monoxyde de carbone peut être acheminée pendant une phase de désulfatation au moyen du courant de gaz d'échappement, **caractérisé en ce que** le catalyseur d'oxydation pouvant être contaminé avec du soufre et devant par conséquent être désulfuré à intervalles prédéfinis est formé par un catalyseur d'oxydation de NO (5) présentant une activité d'oxydation de CO, en aval duquel est prévu au moins un catalyseur SCR (6) ne présentant pas d'activité d'oxydation de CO, et **en ce qu'**au catalyseur d'oxydation de NO (5) peut être acheminée, pendant la phase de désulfatation, par allumage par compression homogène du moteur à combustion interne ou par allumage par compression partiellement homogène du moteur à combustion interne, une quantité de monoxyde de carbone telle que la température au niveau du catalyseur d'oxydation de NO à désulfurer (5) augmente à une température de désulfatation définie permettant une désulfatation du catalyseur d'oxydation de NO (5).
